# EUROPEAN PATENT APPLICATION

(11) **EP 1 526 692 A2**
(43) Date of publication of application: **27.04.2005**
(21) Application number: 04256284.3
(22) Date of filing: 12.10.2004
(51) Int. Cl.: H04L 12/56

(54) **Method for multi-band ultra wide band communication of frequency hopping type**

(30) Priority: 18.10.2003 KR 2003072783
(71) Applicant: SAMSUNG ELECTRONICS CO. LTD., Suwon-city, Kyungki-do (KR)
(72) Inventor: Hong, Seong-seol, 109-1805 Dongsuwon LG Village, Suwon-shi Gyeonggi-do (KR); Choi, Yun-hwa, Seoul (KR)
(74) Representative: Robinson, Ian Michael

(57) **Abstract**

A method for multi-band ultra wide band (UWB) communication of a frequency hopping type. The method includes requesting a piconet coordinator (PNC) of a piconet to allocate a time, at which data is transmitted, according to a predetermined PNC sequence using frequency hopping. Information regarding the time, which is allocated by the PNC for data transmission, is received according to the PNC sequence using the frequency hopping. Then, data is transmitted to a predetermined device according to the information regarding the time allocated by the PNC for data transmission. Since a mechanism needed by a medium access control (MAC) layer for the multi-band UWB communication of the frequency hopping type is provided, the multi-band UWB communication of the frequency hopping type is accomplished.

## Description

The present invention relates to a medium access control (MAC) mechanism for supporting a multi-band ultra wide band (UWB) communication system, and more particularly, to a method of generating a piconet suitable for multi-band UWB communication of a frequency hopping type, and associating and communicating with a new device.

With the rapid development of communication technology, ad-hoc communication or ubiquitous networks have been vigorously researched and developed. Currently, technology relating to a wireless personal area network (WPAN) is getting much attention in an ad-hoc or ubiquitous network environment. In communications over the WPAN, every device within a piconet defined by an Institute of Electrical and Electronics Engineers (IEEE) 802.15.3 standard can access a wireless medium (WM) according to information provided by a piconet coordinator (PNC). In other words, a single piconet includes a PNC and one or more devices, and data can be transmitted between the PNC and a device or between the devices using an ad-hoc method.

UWB communication systems have been implemented in a field of a physical layer (PHY) under a WPAN environment. Initially, UWB technology was used for military purposes. Since 1994, the UWB technology has been researched and developed by some venture companies and laboratories for commercial use. In 2002, the Federal Communications Commission in the United States permitted the commercial use of the UWB technology. At present, the IEEE 802.15 Working Group (WG) is working on standardization. A UWB communication system is compatible with existing wireless communication services without securing additional frequency resources and allows high-speed communication with low power since a UWB communication system uses very short pulses. In addition, since a bandwidth of a UWB signal is very wide, e.g., a several GHz, in a frequency domain, the UWB signal is detected in a level lower than a noise level in the frequency domain and thus rarely affects other devices. Moreover, since the UWB signal has a pulse of a very small duty cycle, it offers various advantages including a high transfer rate, multiple access implementation, and low multipath interference.

Although the current UWB technology is divided into a single-band mode and a multi-band mode, recently, the multi-band mode has been increasingly researched and developed. Unlike an initial single-band system, a multi-band UWB system uses a UWB signal containing a carrier wave and adopts a lot of conventional technology relating to communication systems. A multi-band UWB system can be constructed using devices having less bandwidth than a single-band system and uses a frequency hopping type of communication, and therefore, the multi-band UWB system has spectral flatness compared to the single-band system.

However, the existing IEEE 802.15.3 standard lacks a mechanism for multi-band UWB communication. Therefore, a need exists for a method for multi-band UWB communication in the WPAN environment.

According to the present invention there is provided an apparatus and method as set forth in the appended claims. Preferred features of the invention will be apparent from the dependent claims, and the description which follows.

The present invention provides a mechanism needed by a medium access control (MAC) layer for multi-band ultra wide band (UWB) communication.

According to an exemplary embodiment of the present invention, there is provided a method for multi-band UWB communication of a frequency hopping type, the method including (a) requesting a piconet coordinator (PNC) of a piconet to allocate a time, at which data is transmitted, according to a predetermined PNC sequence using frequency hopping; (b) receiving information regarding the time, which is allocated by the PNC for data transmission, according to the PNC sequence using the frequency hopping; and (c) transmitting data to a predetermined device according to the information regarding the time allocated by the PNC for data transmission.

The method may further comprise associating a device with the piconet using a predetermined scheme. Here, the associating with the piconet may comprise determining available channels by scanning channels, acquiring information regarding the PNC sequence from the PNC that uses some or all of the scanned channels, transmitting an association request to the PNC, the association request comprising information regarding the available channels, and receiving an association reply permitting the association from the PNC. The determining of the available channels may comprise determining the available channels based on a channel environment. Also, the acquiring of the information may comprise finding the PNC sequence in information regarding the PNC sequence, which is transmitted by the PNC through a particular channel among the determined available channels. The information regarding the PNC sequence is preferably a PNC sequence number representing the PNC sequence or a series of channel numbers according to the PNC sequence. The transmitting of the association request may comprise transmitting the association request comprising the information regarding the available channels to the PNC according to the PNC sequence using the frequency hopping.

Also, the method may further comprise receiving information regarding channels available to member devices in the piconet from the PNC. Here, the transmitting of data may comprise transmitting the data to the predetermined device using channels common to a set of the determined available channels and to a set of channels available to the predetermined device. In this case, the data may be transmitted to the predetermined device according to the PNC sequence using the frequency hopping.

The above and other features and advantages of the present invention will become more apparent by describing in detail preferred embodiments thereof with reference to the attached drawings in which:
Figure 1 illustrates members included in a single piconet;
Figure 2 illustrates a spectrum of a signal of a multi-band ultra wide band (UWB) communication system in a frequency domain;
Figure 3 illustrates frequency hopping sequences for minimizing interference between piconets performing multi-band UWB communication of a frequency hopping type;
Figure 4 illustrates frequency hopping sequences of devices transmitting data in a single piconet, according to an embodiment of the present invention;
Figures 5A and 5B illustrate states before and after, respectively, a device associates with a piconet having a particular piconet coordinator (PNC) sequence;
Figure 6 illustrates a structure of a frame made by a device to transmit an association request command to a PNC, according to an embodiment of the present invention;
Figure 7 illustrates a structure of a device information field that is included in a PNC information command frame made by a PNC to indicate that a new device is associated with a piconet, according to an embodiment of the present invention;
Figure 8 is a flowchart of a procedure in which a device is associated with a piconet, according to an embodiment of the present invention;
Figure 9 is a flowchart of a procedure in which one device transmits data to another device; and
Figure 10 illustrates a structure of a superframe defined by an Institute of Electrical and Electronics Engineers (IEEE) 802.15.3 standard.

Hereinafter, exemplary embodiments of the present invention will be described in detail with reference to the attached drawings.

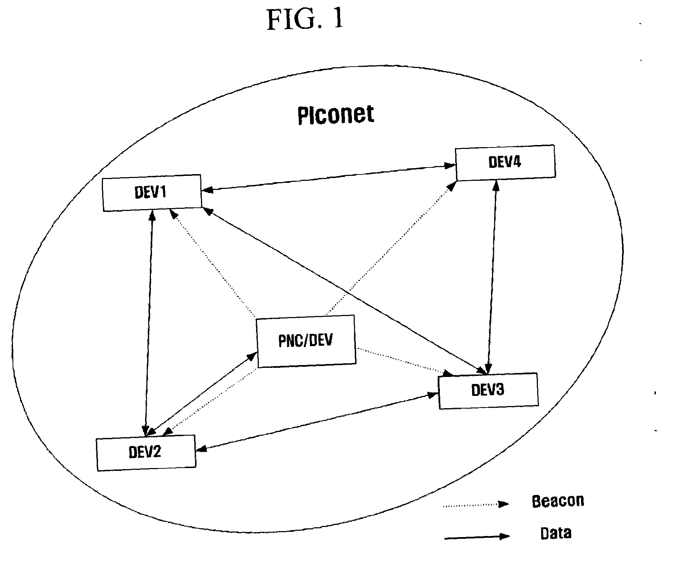

Figure 1 illustrates members included in a single piconet.

According to an Institute of Electrical and Electronics Engineers (IEEE) 802.15.3 standard, a piconet is a group of one or more devices (DEVs) that share a single piconet coordinator (PNC) and locally associate with each other. The PNC has a DEV function, a coordination function, and functions for quality of service (QoS), synchronization, and association. The PNC provides a beacon for basic timing for a piconet. In addition, the PNC manages QoS, power curtailment, and piconet access control. Since a standard piconet is generated only when necessary, it is referred to as an ad-hoc network.

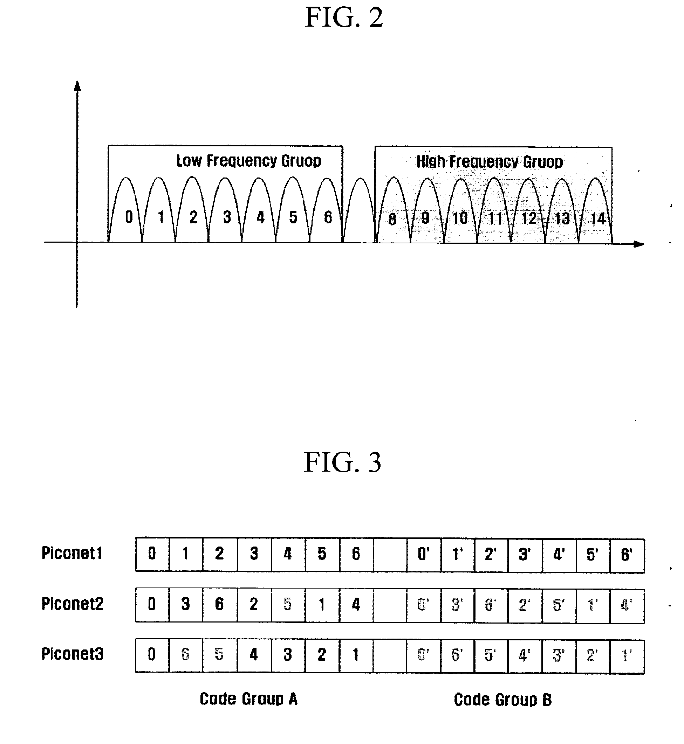

Figure 2 illustrates a spectrum of a signal of a multi-band ultra wide band (UWB) communication system in a frequency domain.

A multi-band UWB has about several sub-bands through several tens of sub-bands. As shown in Figure 2, the multi-band UWB may have 15 sub-bands. Of those sub-bands, one or some sub-bands may be reserved to avoid collision with household appliances other than a UWB system, for example, wireless local area network (LAN) DEVs defined by an 802.11a standard. The frequency domain for a UWB signal shown in Figure 2 is divided into a group consisting of seven low-frequency sub-bands 0 through 6 and a group consisting of high-frequency sub-bands 8 through 14.

Figure 3 illustrates frequency hopping sequences for minimizing interference between piconets performing multi-band UWB communication of a frequency hopping type.

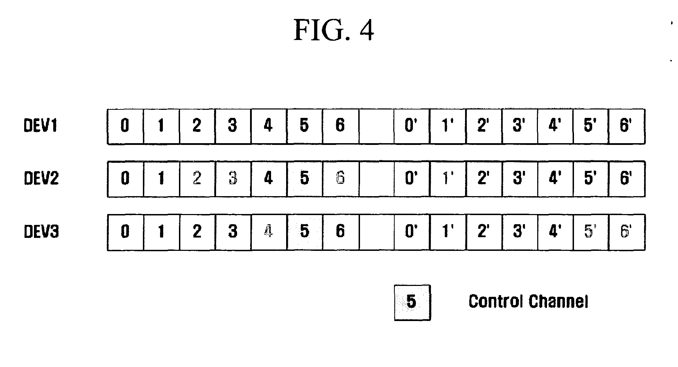

The multi-band UWB communication uses frequency hopping to flatten frequency characteristics and reduce an influence of fading. Frequency hopping sequences may be variously set like piconet1, piconet2, and piconet3 shown in Figure 3. A system may be embodied such that the low-frequency sub-band group and the high-frequency sub-band group are subjected to frequency hopping in the sequences as shown in Figure 3. To construct a piconet, a PNC performs a channel scan and determines available channels according to a channel state. In an exemplary embodiment of the present invention, a channel indicates a sub-band. If the channel state is good, all channels are available, as shown for piconet1. However, if the channel state is poor, only some of the channels are available, as shown for piconet2 and piconet3. Whether the state of a channel is good or poor can be determined according to a level of noise in the channel. For example, in a place where a 2.4 GHz wireless LAN is available, a 2.4 GHz channel may not be available. Meanwhile, if the number of channels available in a single piconet is determined, the PNC selects an appropriate PNC sequence in accordance with the channel state. The PNC sequence indicates order in which frequency hopping is performed on channels available to a piconet. The channels available to the piconet are channels available to the PNC. Some DEVs or all of the DEVs included in the piconet can use channels that are not used by the PNC. For example, the piconet2 uses channels 0, 1, 2, 3, 4, and 6 while a DEV on the piconet2 can use channels 0, 1, 5, and 6. This will be later described in detail with reference to Figure 4. Where there is another piconet influencing a current piconet, the PNC sequence can be selected such that different channels are used for a same chip, as shown in Figure 3, in order to minimize interference. Meanwhile, since important data such as a beacon is transmitted through a channel used by the piconet, it is determined which channels can be used by all DEVs associated with the piconet as channels that are used by the piconet. Generally, members included in the piconet are separated from one another by a distance of less than about 10 m, and therefore, channels available to each of the members are similar to those available to other members.

Figure 4 illustrates frequency hopping sequences of DEVs transmitting data in a single piconet, according to an embodiment of the present invention.

A single piconet is determined by a single PNC sequence. Referring to Figure 4, the PNC sequence is 0, 1, 2, 3, 4, 5, 6, 0', 1', 2', 3', 4', 5', 6'. DEV1, DEV2, and DEV3 included in a piconet comply with the PNC sequence. While the DEV1 can use all channels, the DEV2 and the DEV3 can use only some channels among all of the channels. The DEV2 uses channels 0, 1, 4, 5, 0', 2', 3', 4', 5', and 6', and the DEV3 uses channels 0, 2, 3, 5, 6, 0', 1', 2', 3', and 4' . Channels available to a PNC and each DEV are determined according to a channel environment. In other words, a DEV close to another DEV such as a microwave oven or a wireless LAN system does not use some of the channels in order to avoid interference with the other DEV.

In Figure 4, the shaded channel 5 is a control channel. The control channel is used by the PNC to send a control signal to DEVs included in the piconet and other DEVs wanting to associate with the piconet. The control channel may be one channel, e.g., a best channel (having least noise), among channels scanned by the PNC when the piconet is generated. A representative of the control signal is a frame (not shown) informing the PNC sequence. The frame informing the PNC sequence includes a header and a body, which contains information regarding the PNC sequence. The information regarding the PNC sequence may be expressed in the body as including a channel sequence. Alternatively, a sequence number representing particular PNC sequences may be expressed in the body. For example, where the sequence number is expressed in the body, if a PNC sequence of the piconet1 shown in Figure 3 is represented by "1", a PNC sequence of the piconet2 is represented by "2", and a PNC sequence of the piconet3 is represented by "3", "1" is recorded in a body of a frame informing the PNC sequence in the piconet including the DEV1, the DEV2, and the DEV3 having the frequency hopping sequences shown in Figure 4. Such PNC sequence may be embedded into a beacon to report the PNC sequence to DEVs. However, a separate frame containing the information regarding the PNC sequence may be periodically broadcasted through the control channel. Accordingly, a DEV wanting to associate with the piconet can recognize a frequency hopping pattern of the piconet through the control channel.

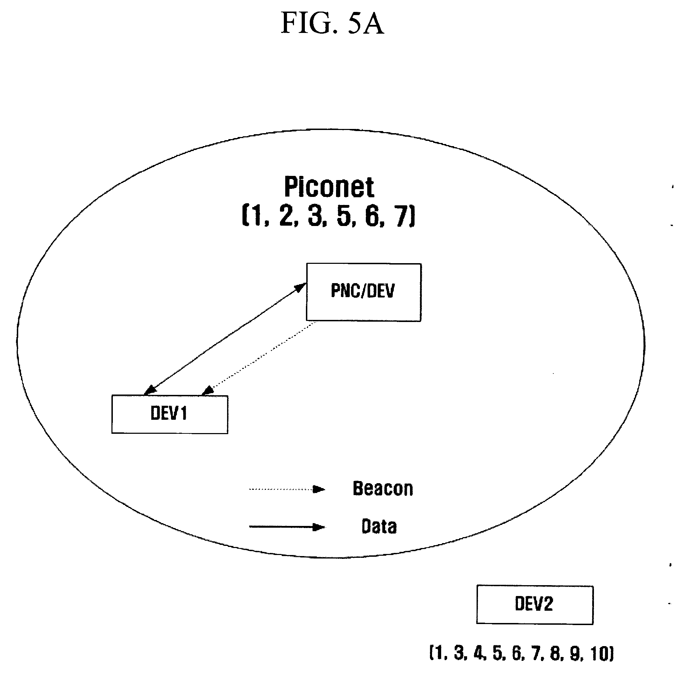

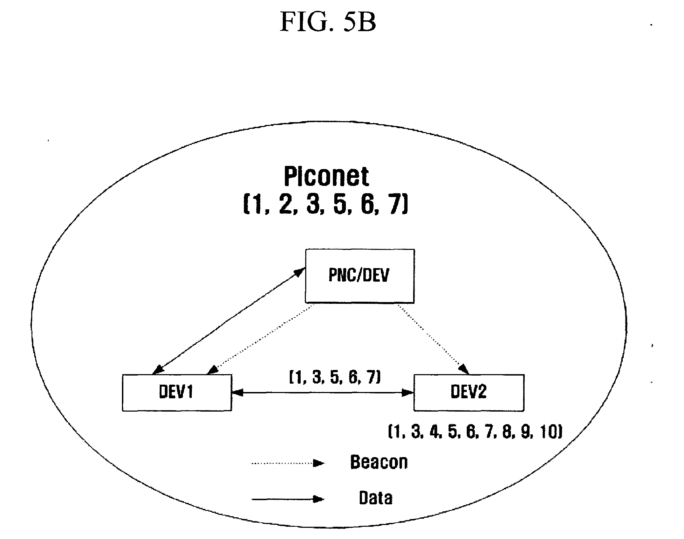

Figures 5A and 5B illustrate states before and after, respectively, a DEV associates with a piconet having a particular PNC sequence.

Referring to Figure 5A, both of a PNC and DEV1 that are included in a piconet use channels 1, 2, 3, 5, 6, and 7. In this situation, DEV2 using channels 1, 3, 4, 5, 6, 7, 8, 9, and 10 will associate with the piconet to transmit data to and receive data from the DEV1. The DEV2 associates with the piconet according to a predetermined association procedure, and Figure 5B illustrates a result of the association. The DEV2 transmits data to and receives data from the DEV1 using the channels 1, 3, 5, 6, and 7 common to both of the DEV1 and the DEV2. Using the channels 1, 3, 5, 6, and 7 may be performing frequency hopping using the channels 1, 3, 5, 6, and 7 according to an arbitrary sequence. However, frequency hopping may be performed according to the PNC sequence. For example, if the PNC sequence is 1, 2, 3, 5, 7, 6, one DEV among the DEV1 and the DEV2 transmits a UWB signal through the channel 1, idles at a chip transmitting a signal of the channel 2, and then transmits UWB signals sequentially through the channels 3, 5, 7, and 6. The other DEV among the DEV1 and the DEV2 receives the UWB signals according to a current frequency hopping sequence.

Referring to Figures 5A and 5B, the PNC and the DEV1 use the same channels. However, the DEV1 may not use some of the channels used by the PNC and use some of channels that are not used by the PNC. For example, the DEV1 may use the channels 1, 3, 4, 5, 6, and 7. In this case, the DEV1 can communicate with the DEV2 according to frequency hopping using the channels 1, 3, 4, 5, 6, and 7 common to both of the DEV1 and the DEV2. Here, a frequency hopping sequence for data communication can be the PNC sequence.

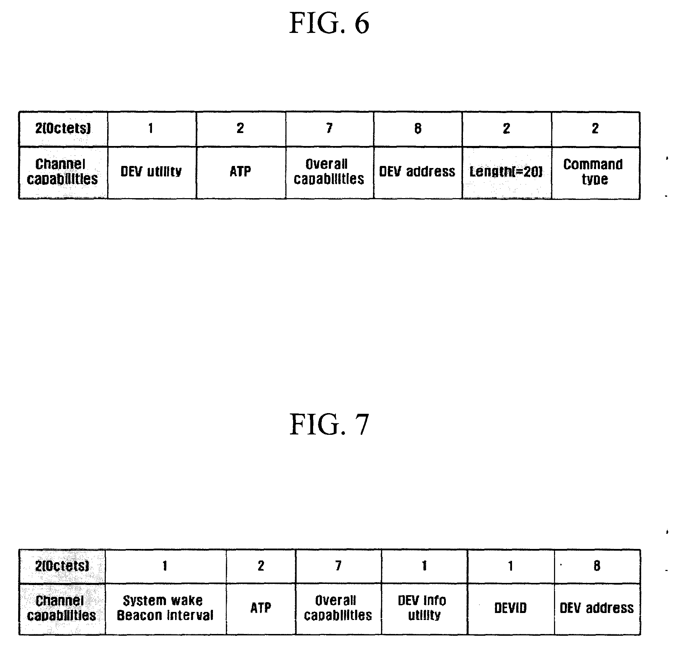

Figure 6 illustrates a structure of a frame made by a DEV to transmit an association request command to a PNC, according to an embodiment of the present invention.

The association request frame includes sequentially from a right most end a 2-octet command type field indicating a type of the frame (where 1 octet is 8 bits), a 2-octet length field indicating a length of a part of the frame succeeding the length field, an 8-octet DEV address indicating an address of the DEV wanting association, a 7-octet overall capabilities field, a 2-octet association timeout period (ATP) field, a 1-octet DEV utility field, and a 2-octet channel capabilities field. The command type field indicates a type of a command frame. The IEEE 802.15.3 standard uses a 0x0000 frame as an association request frame. According to the IEEE 802.15.3 standard, the length field indicates 18 octets. However, in the embodiment of the present invention, a value of 20 including 2 octets that is a length of the channel capabilities field is recorded in the length field. A DEV address is 64 bits in length. The overall capabilities field has 4 octets for PNC capabilities and 3 octets for DEV capabilities. A maximum number of DEVs that can be associated with a piconet by the PNC, maximum transmission power, etc. are recorded in the 4 octets for the PNC capabilities. Fields indicating whether the DEV can receive a signal through multicast and/or from a single source, a field indicating a desirable size of a fragment, etc. are recorded in the 3 octets for the DEV capabilities. An ATP expresses duration in milliseconds while association is maintained in a state where there is no communication between the PNC and the DEV. The DEV utility field includes a field indicating whether the DEV requests the PNC to send a piconet service command or a field indicating whether the DEV is designated as a neighboring PNC. The channel capabilities field indicates available channels. For example, in a UWB system using the above-described 15 channels, bits b0 through b14 indicate channels, respectively. If the DEV uses the channels 0, 1, 2, 4, 9, and 10, bits b0, b1, b2, b4, b9, and b10 may be set to "1", and the remaining bits may be set to "0". An association acknowledgement frame corresponding to the association request complies with the IEEE 802.15.3 standard.

Figure 7 illustrates a structure of a DEV information field that is included in a PNC information command frame made by a PNC to indicate that a new DEV is associated with a piconet, according to an embodiment of the present invention.

The DEV information field includes an 8-octet DEV address field indicating an address of the newly associated DEV, a 1-octet DEVID field indicating an ID allocated to the newly associated DEV, a 1-octet DEV information (info) utility field indicating a membership state or the like expressing security or non-security, a 7-octet overall capabilities field, a 2-octet ATP field, a 1-octet system wake beacon interval field indicating a value that the new DEV transmits to the PNC using a synchronous power curtailment type request command, and a 2-octet channel capabilities field indicating available channels. DEVs that receive the PNC information command frame within the piconet can identify channels that are available to the new DEV. Due to the transmission of the PNC information command frame, each of the DEVs included in the piconet can have information regarding channels available to the other DEVs.

Meanwhile, the PNC periodically broadcasts an information command containing information regarding all of the DEVs. Accordingly, each of the DEVs including the newly associated DEV can obtain information regarding channels available to the other DEVs through the information command broadcast by the PNC.

The channel capabilities field shown in Figures 6 and 7 has a different length depending on a total number of channels. For example, in a UWB communication system including 64 channels, the channel capabilities field is a minimum of 64 bits, i.e., 8 octets, in length.

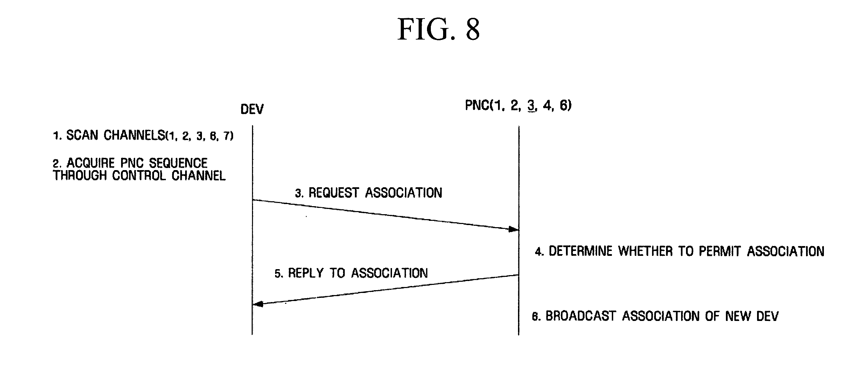

Figure 8 is a flowchart of a procedure in which a DEV is associated with a piconet, according to an embodiment of the present invention.

The DEV wanting association with the piconet scans channels. The DEV determines channels, e.g., channels 1, 2, 3, 6, and 7, that are in a satisfactory condition and available to the DEV by scanning the channels. Thereafter, the DEV acquires a channel sequence from a PNC of a piconet using the channel 3 as a control channel. If the piconet uses as the control channel a channel other than the determined available channels 1, 2, 3, 6, and 7, the DEV cannot find a PNC sequence and cannot associate with the piconet. The DEV that finds the PNC sequence requests the PNC for association according to the PNC sequence. For example, if the PNC sequence is 1, 2, 4, 6, the DEV transmits an association request frame to the PNC through the channels 1, 2, and 6 in sequence other than the control channel among the channels 1, 2, 3, 6, and 7 available to the DEV. In response to the association request from the DEV, the PNC determines whether to permit the association. In the case where the association is not possible such as the case where a maximum number of DEVs that can be associated with the piconet have already been associated with the piconet, the PNC does not permit the association. Otherwise, the PNC permits the association. When the PNC permits the association, the PNC transmits a reply to the DEV and broadcasts information regarding the new DEV to the other DEVs included in the piconet. With such operations, the existing DEVs included in the piconet can obtain information regarding channels available to the new DEV.

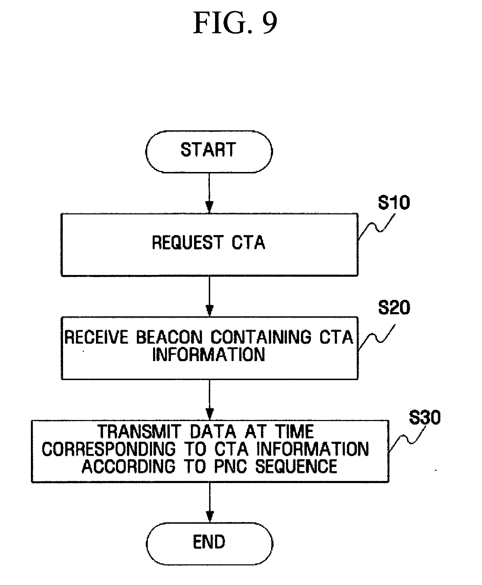

Figure 9 is a flowchart of a procedure in which DEV1 transmits data to DEV2.

To transmit data to the DEV2, the DEV1 requests a PNC to perform channel time allocation (CTA) in operation S10. In response to the CTA request, the PNC allocates a time slot at which the DEV1 transmits data to the DEV2, and the DEV1 receives a beacon that contains CTA information including the time slot and is broadcast by the PNC in operation S20. The DEV1 obtains the CTA information from the beacon and transmits data at the time slot included in the CTA information through channels common to both of the DEV1 and the DEV2 in operation S30. In an exemplary embodiment of the present invention, frequency hopping is performed according to a PNC sequence when transmitting the data. Where the PNC sequence is 1, 2, 3, 4, 5, 6 and the channels 1, 2, 3, 5, and 6 are common to both of the DEV1 and the DEV2, UWB signals may be transmitted in a channel sequence of 1, 2, and 3 using frequency hopping, a chip of the channel 4 may idle, and then UWB signals may be transmitted in a channel sequence of 5 and 6 using the frequency hopping.

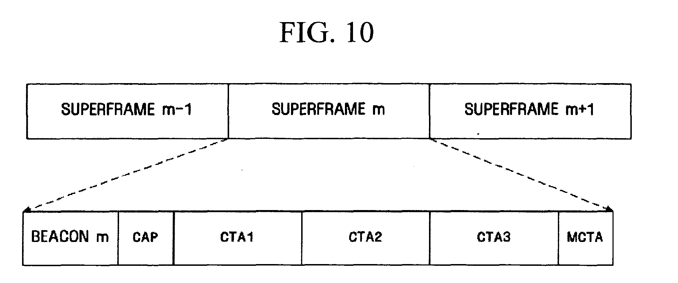

Figure 10 illustrates a structure of a superframe defined by the IEEE 802.15.3 standard.

A superframe is a frame between beacons and may include a beacon, a contention access period (CAP), a CTA, and a management CTA (MCTA). The beacon is used to communicate a time allocation, such as a CTA or an MCTA, and management information for a piconet. The CAP is used to communicate commands and asynchronous data. The CTA is used to communicate commands, isochronous streams, and asynchronous data. The MCTA is a kind of CTA and is used for communication between DEVs and a PNC. Where the DEV1 transmits data to the DEV2, typically, the DEV1 requests CTA of the PNC during the CAP. In response to the CTA request, the PNC performs an appropriate CTA and broadcasts a beacon containing information regarding the appropriate CTA. The DEV1 receives the beacon and transmits data to the DEV2 at a time slot corresponding to the appropriate CTA. In an exemplary embodiment of the present invention, frequency hopping is performed on channels available to both of the two DEVs when transmitting data. A frequency hopping sequence may be a PNC sequence.

The present invention makes the best of the conventional IEEE 802.15.3 standard that does not specifically define a mechanism for multi-band UWB communication and partially makes modification necessary for the multi-band UWB communication to the conventional IEEE 802.15.3 standard, so that the multi-band UWB communication can be performed in an almost similar manner to the conventional IEEE 802.15.3 standard.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for multi-band ultra wide band UWB communication of a frequency hopping type, the method comprising:
(a) requesting a piconet coordinator PNC of a piconet to allocate a time, at which data is transmitted, according to a predetermined PNC sequence using frequency hopping;
(b) receiving information regarding the time, which is allocated by the PNC for data transmission, according to the PNC sequence using the frequency hopping; and
(c) transmitting data to a predetermined device according to the information regarding the time allocated by the PNC for data transmission.

2. The method of claim 1, further comprising associating a device with the piconet using a predetermined scheme.

3. The method of claim 2, wherein the associating with the piconet comprises:
determining available channels by scanning channels;
acquiring information regarding the PNC sequence from the PNC that uses some or all of the scanned channels;
transmitting an association request to the PNC, the association request comprising information regarding the available channels; and
receiving an association reply permitting an association from the PNC.

4. The method of claim 3, wherein the determining of the available channels comprises determining the available channels based on a channel environment.

5. The method of claim 3 or 4, wherein the acquiring of the information comprises finding the PNC sequence in information regarding the PNC sequence, which is transmitted by the PNC through a particular channel among the available channels.

6. The method of claim 5, wherein the information regarding the PNC sequence is a PNC sequence number representing the PNC sequence.

7. The method of claim 5 or 6, wherein the information regarding the PNC sequence is a series of channel numbers according to the PNC sequence.

8. The method of any of claims 3 to 7, wherein the transmitting of the association request comprises transmitting the association request comprising the information regarding the available channels to the PNC according to the PNC sequence using the frequency hopping.

9. The method of any preceding claim, further comprising receiving information regarding channels available to member devices comprised in the piconet from the PNC.

10. The method of claim 9, wherein operation (c) comprises transmitting the data to the predetermined device using channels common to a set of the available channels and to a set of channels available to the predetermined device.

11. The method of claim 10, wherein the data is transmitted to the predetermined device according to the PNC sequence using the frequency hopping.
